Europäisches Patentamt

European Patent Office

Office européen des brevets

(11) Publication number: **0 563 963 A1**

## EUROPEAN PATENT APPLICATION

(21) Application number: **93105430.8**

(22) Date of filing: **01.04.93**

(51) Int. Cl.⁵: **A01N 25/00**, A01N 63/00,
//(A01N63/00,25:00)

(30) Priority: **02.04.92 US 862047**

(43) Date of publication of application:
**06.10.93 Bulletin 93/40**

(84) Designated Contracting States:
**AT BE CH DE DK ES FR GB GR IT LI LU NL PT SE**

(71) Applicant: **AgriSense**
**4230 West Swift**
**Fresno, CA 93722(US)**

(72) Inventor: **Knapp, John D.**
**2181 W. San Bruno**
**Fresno, CA 93711(US)**
Inventor: **Denton, William Hershel**
**938 E. Cromwell**
**Fresno, CA 93710(US)**

(74) Representative: **Dost, Wolfgang,**
**Dr.rer.nat.,Dipl.-Chem. et al**
**Patent- & Rechtsanwälte**
**Bardehle . Pagenberg . Dost . Altenburg .**
**Frohwitter . Geissler & Partner,**
**Postfach 86 06 20**
**D-81633 München (DE)**

(54) **Delivery system for insecticides.**

(57) An enhanced delivery system for insecticides which utilizes novel insect feeding stimulant compositions. These compositions consist essentially of:
(a) a yeast selected from the group consisting of *Candida utilis*, *Pichia pastoris* and *Kluvomyces fragilis*;
(b) a flour selected from the group consisting of: cotton seed flour, soybean flour, rice flour, wheat flour and rape seed (canola); and
(c) a sugar source selected from the group consisting of sucrose, fructose and glucose.
In addition such compositions can contain dispersants, surfactants, and silica compounds along with a selected insecticide.

EP 0 563 963 A1

This invention relates to compositions which stimulate insect feeding and a method for using such compositions for insect control.

BACKGROUND

Insect control until recently has been accomplished by the application of insecticides. However, the widespread use of insecticides as the primary means of controlling insects has several drawbacks. Because most insecticides indiscriminately kill all types of insects, beneficial insects are removed from the ecosystem. Insecticides, when employed as the primary source of insect control, also exert a strong selective pressure on the development of more resistant pests. Once resistant insects appear, increased amounts of insecticide must be applied to maintain the same level of insect control or a new insecticide must be utilized. Unfortunately, many insecticides can build up in the ecosystem, creating a hazard to both the farmer and the consumer.

Alternate methods of insect control therefore need to be implemented. Such methods of insect control should provide a greater degree of selectivity and control of insect pests while maintaining a high crop yield and low negative environmental impact. The emphasis of pest management has moved toward bioinsecticides. These bioinsecticides must be ingested by or be in direct contact with the targeted insects, and the need for an enhanced delivery system has therefore increased. A feeding stimulant applied with the bioinsecticides should increase their efficacy. Most biorational insecticides and some chemical insecticides are stomach poisons which tend to inhibit insect feeding and which depend upon the insect ingesting a lethal dosage. A feeding stimulant to overcome sub-lethal dosages is therefore needed. Such a composition to assist in achieving an appropriate dosage to control insect population would be a significant contribution to the art.

SUMMARY OF THE INVENTION

It is an object of the present invention to provide a delivery system for insecticides which utilize novel compositions that act as feeding stimulants for insects.

It is another object of the present invention to provide novel feeding stimulant compositions which remains effective in the presence of insecticides which would otherwise inhibit insect feeding.

It is yet another object of the present invention to provide a delivery system for insecticides which encompasses the use of an additive package in combination with novel feeding stimulant compositions to facilitate dispersal of said compositions.

It is a further object of the present invention to provide an insect control system which improves selectivity of insecticides and reduces the environmental impact of insecticides by reducing the quantity of insecticide necessary to achieve a lethal dosage.

These and other objects of the present invention will become apparent upon inspection of the disclosure and the claims herein provided.

In accordance with the present invention, I have discovered that by including a yeast selected from the group consisting of *Candida utilis*, *Pichia pastoris* and *Kluvomyces fragilis* in a feeding composition for insects, insect feeding is stimulated.

One embodiment of the present invention relates to novel feeding stimulant compositions which consist essentially of:

(a) a yeast selected from the group consisting of: *Candida utilis*, *Pichia pastoris* and *Kluvomyces fragilis*;

(b) a flour selected from the group consisting of: cotton seed flour, rape seed flour, rice flour, and wheat flour; and

(c) a polysaccharide source selected from the group consisting of sucrose, fructose, and glucose.

Another embodiment of the present invention relates to an additive package which when combined with the novel feeding stimulant compositions, facilitates dispersal of the composition in water.

A further embodiment of the present invention relates to an enhanced delivery system for insecticides which incorporates treating a locus with a novel feeding stimulant composition.

DETAILED DESCRIPTION

The novel feeding stimulant compositions of the present invention provide vehicles by which biorational and conventional insecticides, intended for insect ingestion, are delivered, while stimulating insect feeding. Biorational insecticides are control agents and chemical analogues of naturally-occurring compounds used

2

for insect control. These compounds can consist of viruses, bacteria, and fungi, or their by-products, or may be naturally occurring compounds such as borax. Conventional insecticides are compounds such as synthetic pyrethroids, organophosphates and chlorinated hydrocarbons.

In keeping with the present invention, the basic feeding stimulant compositions consist essentially of a combination of yeast, flour, and sugar.

Yeast suitable for use in the compositions of the present invention are those strains selected from the group consisting of *Candida utilis*, *Kluvomyces fragilis*, and *Pichia pastoris*. Preferred strains of each yeast specie are *Candida utilis* NRRL Y-1082, *Kluvomyces fragilis* NRRL Y-2264, and *Pichia pastoris* NRRL Y-11431. In addition, both *Kluvomyces fragilis* and *Candida utilis* are more preferable, as these yeasts have been approved by both the EPA and FDA for food and feed use.

The yeast, when in combination with flour and sugar significantly increases insect feeding and thus provides the basis for an insect feeding stimulant to be used as an enhanced delivery system for insecticides.

The amount of yeast to be added to form the feeding stimulant compositions of the present invention is in the range of about 30 to about 40 weight percent of the total weight. The preferred amount of yeast is about 34 weight percent of the total weight.

The term flour as used herein refers to a ground seed having a particle size of less than 100 microns and being selected from a group consisting of cotton seed flour, soybean flour, rice flour, wheat flour, and rape seed (canola). The cotton seed flour may be from either glanded or glandless cotton plants. Such flours in combination with the other ingredients of the present invention provide an effective insect feeding stimulant. In one presently preferred embodiment, the flour is cotton seed flour.

The amount of flour to be added to any of the feeding stimulant compositions is about 35 to about 45 weight percent of the total weight. The preferred amount of flour is about 44 weight percent of the total weight.

The source of poly saccharide of the feeding stimulant compositions is at least one sugar selected from the group consisting of sucrose, fructose, and glucose. The preferred sugar of the present invention is sucrose.

The amount of sugar to be added to any of the feeding stimulant compositions is in the range of about 10 to about 20 weight percent of the total weight. The preferred amount of sugar is about 14 weight percent of the total weight. The combination of the above three stimulant components namely yeast, flour, and sugar, provides the novel and effective insect feeding stimulant compositions of the present invention.

In one preferred embodiment of the present invention, a fourth component, a vegetable oil, is included in the final composition. Addition of such vegetable oils is optional since the necessary flour component normally contains a sufficient amount of oil to achieve the stimulatory result, and therefore renders the addition of the vegetable oil nonessential.

The vegetable oil is one selected from the group consisting of cotton seed oil, peanut oil, corn oil, safflower oil and canola (rape seed) oil.

The amount of vegetable oil if included in any of the feeding stimulant compositions is in the range of about 0 to about 4 percent of the total weight.

The preferred vegetable oil is cotton seed oil and the preferred amount of vegetable oil to be added is about 1.5 weight percent of the total weight when the yeast is about 34.0 weight percent of the total weight; the flour is about 44.0 weight percent of the total weight; and the sugar is about 14.0 weight percent of the total weight.

By combining this composition with various chemical and biorational insecticides which otherwise tend to inhibit insect feeding, the problem of sublethal dose ingestion is overcome.

The insecticides can be blended into the feeding stimulant composition using any suitable means known to those of skill in the art.

The compositions of this invention may be made into a dry form, (e.g. cake, wafer or pellet form) and used at an insect feeding station and ingested, or may be made into a wettable powder, dry flowable or liquid formulation, and used to treat a locus on which target insects are known to feed. If desired, the inventive compositions may also be used in combination with contact poisons and disease-causal agents in a manner which would be known to those skilled in the art.

Optionally there can be present in the feeding stimulant composition dispersants, surfactants, and/or silica compounds. These additives are beneficial in achieving an effective formulation such as a wettable powder. However, such additives must neither act as an insect repellant nor counteract the stimulatory effects of the inventive compositions. Combining the additives with the novel feeding stimulant compositions prior to packaging the compositions serves to blend the active ingredients together and facilitate the use of the stimulant composition as a spray insecticide.

The additives, for purposes of the present invention, fall into three categories. The first category of additives of the present invention is dispersants. The term dispersant as herein used includes materials that reduce the cohesiveness of like particles, either solid or liquid. Dispersants are added during the preparation of wettable powders or emulsifiable concentrates to facilitate dispersion and suspension of the ingredients in an aqueous solution to treat a locus. Suitable dispersants are those selected from a group of lignosufonates i.e. dispersants for wettable powders, water dispersible granules and suspension concentrates; stabilizers of liquid concentrates. Lignosulonates are water-soluble, anionic derivatives of lignin.

Several different types of lignosulfonate dispersants exist and a proper match of dispersant with a specific formula is required. Two dispersants which were found to be especially useful in the practice of the present invention were the sodium salt of lignosulfonic acid, commercially available as Reax 80N from Westvaco Polychemicals and the sodium salt of a naphalene sulfonic acid formaldehyde polymer, commercially available as Lomar PW from Henkel Corporation.

The above two dispersants may either be used separately (i.e. only one added to the composition) or in combination. However, it is preferred that they be used in combination because tests determined the combination provided quickest dispersal into the aqueous solution when used together in correct ratio. The concentration of the preferred dispersants is in the range of about 2 to about 3 weight percent, and preferably about 2.6 weight percent of the total weight.

The second category of additives as practiced in the present invention is surfactants. A surfactant, wetting agent, is a substance that reduces the interfacial tension of two boundary lines. These materials can be classed as nonionic, anionic and cationic.

Factors involved in the selection of a surfactant as a wetting agent include the homogeneity of concentrates, storage stability of powder or concentrate, the ease of mixing in water, effect of water hardness on dispersion or emulsion stability, and end use cost of ingredients. A presently preferred surfactant is that which is commercially known as Surfynol 825 from Air Products and Chemicals, Inc.; however, other suitable surfactants include but are not limited to those commercially known as and selected from the group consisting of Agriwet TF from Henkel Corporation, Morwet DB from DeSoto, Inc., and Aerosol OTB from American Cyanamid Company.

The amount of surfactant to be added to the composition is in the range of about to about 1.5 to about 3 weight percent of the total weight. A preferred amount of surfactant is about 2.2 weight percent of the total weight.

The third category of additives when formulating a wettable powder that may be present is a silica compound. Any silica compound which allows adding the oil in a dry state may be used. The presently preferred silica compound is an amorphous, precipitated, hydrated silicon dioxide commercially available as HiSil 233 from PPG Industries, Inc.

The amount of silica compound to be added to the composition is in the range of about 1.5 to about 2.5 weight percent of the total weight. A preferred amount of silica compound is about 1.9 weight percent of the total weight.

A presently preferred additive package consisting of dispersants. Reax 80N and Lomar PW which are respectively the sodium salt of lignosulfonic acid, $(HOCH_3OAr)_n(SO_3Na)_x$ where "n" and "x" are equal to a positive integer, and the sodium salt of naphthalene sulfonic acid formaldehyde polymer, a surfactant Surfynol 825 3,6-dimethyl-4-octyne-3,6 diol, and an amorphous silicon dioxide, should be added in amounts sufficient to effect the dispersal of the feeding stimulant compositions in water. Facilitating the use of the inventive system is therefore accomplished by addition of this additive package to the basic feeding stimulant composition.

The preferred feeding composition inclusive of said additive package consists essentially of:

(a) *Candida Utilis* yeast with a total weight percent of 34;
(b) cotton seed flour with a total weight percent of 43.8;
(c) sucrose with a total weight percent of 14;
(d) cotton seed oil with a total weight percent of 1.5;
(e) lignosulfonic acid, sodium salt $(HOCH_3OAr)_n(SO_3Na)_x$ with a total weight percent of 1.3;
(f) naphthalene sulfonic acid formaldehyde polymer, sodium salt with a total weight percent of 1.3;
(g) silicon dioxide with a total weight percent of 1.9; and
(h) 3,6-dimethyl-4-octyne-3,6-diol on an amorphous silicon dioxide with a total weight percent of 2.2.

The feeding stimulant composition consisting essentially of either yeast, flour and sugar or that composition consisting essentially of the yeast, flour, sugar and vegetable oil or the composition consisting essentially of the yeast, flour, sugar, vegetable oil and the additive package, can be combined with an insecticide selected from the group consisting of conventional and biorational insecticides. Such insecticides are employed in an amount sufficient to provide lethal dosages of insecticide for the targeted insects.

Conventional insecticides may be those selected from a group consisting of carbamates, synthetic pyrethroids, and organophosphates; and said biorational insecticides are selected from the group consisting of pyrethrum, *Bacillus thuringiensis*, and *Bacillus sphaericus*. A presently preferred insecticide for use with the feeding stimulant of the present invention is *Bacillus thuringiensis*.

The feeding stimulant composition containing the insecticide can be in the form of a wettable powder and can be easily packaged and stored until ready for use. Preferably, the wettable powder is blended with water and sprayed onto a locus where the target insect is known to feed. The appetite of the feeding insect is stimulated and a lethal dose of insecticide ingested.

EXAMPLES

The following examples are provided merely to illustrate the invention and should not be read as to limit the scope of the invention or the appended claims in any way.

Example I

Preparations of Feeding Compositions of Yeast, Flour, Sugar and Combinations Thereof

Nine feeding compositions of yeast, flour, sugar and combinations thereof were prepared in the following manner. All compositions were based on weight percent of each ingredient inclusive of 3 percent agar. Water made up the difference to 100 percent. Yeast was dried *Kluvomyces fragilis*, commercially available from Provesta Corporation, Bartlesville, Oklahoma. The flour was cottonseed flour; the sugar was sucrose. The percentage of the yeast, flour, and sugar components is listed in Table I.

The feeding damage tests were conducted using an agar drop assay. Petri dishes with a diameter of 9 cm were used with moist filter paper in top lid. The bottom was the test arena where agar droplets (3 percent agar) containing the selected feeding stimulant component were dispersed, 20 droplets in total. With dual choice test, 10 droplets of each in alternating fashion. Tests were done in triplet for each choice of feeding composition and run in growth chamber at 30°C. Continuous light, from above, was used. Thirty neonate larvae of *Heliothis zea* were used per petri dish. After 16-17 hours of incubation, results were recorded by estimating the amount of surface feeding on each droplet of agar substrate. This was routinely done by classification in heavy, moderate, and low feeding damages. Low feeding damage was just a few bites from the agar substrate. Moderate was up from a few bites to feeding damage along the perimeter but not on top. If bites were taken from the top of the droplet but perimeter was not completely fed upon, then this was still moderate feeding. Heavy feeding was full perimeter feeding and feeding damage on top as well. Feeding damage results are shown in Table I.

Table I

| | Feeding Stimulant Compositions | | | | | |
|---|---|---|---|---|---|---|
| | Yeast | Sugar | Flour | Feeding Damage | | |
| | | | | Heavy | Moderate | Low |
| 1. | 1% | - | - | 12 | 14 | 4 |
| 2. | - | 1% | - | 21 | 7 | 2 |
| 3. | - | - | 1% | 2 | 13 | 15 |
| 4. | 1% | 1% | - | 13 | 14 | 3 |
| 5. | 1% | - | 1% | 20 | 9 | 1 |
| 6. | - | 1% | 1% | 2 | 9 | 19 |
| 7. | 1% | 1% | 1% | 22 | 8 | 0 |
| 8. | 1% | - | 2% | 21 | 9 | 0 |
| 9. | 2% | - | 1% | 7 | 16 | 7 |

The results shown in Table I determined the efficacy of components used in a feeding stiumlant-differentiation of separate ingredients and indicate that cotton seed flour, and yeast, when used alone at 1 percent level, was not a good feeding material. Yeast and sugar are better than flour. Combination of yeast and either sucrose or flour stimulated feeding. Combination of sucrose and flour without yeast, on the other hand, did not stimulate feeding of the larvae. However, when yeast was added to flour alone and to the combination of sucrose and flour at 1 percent each, the feeding was significantly improved.

Example II

Preparation of the Feeding Stimulant Composition Inclusive of Additives

8.1 pounds of silicon dioxide, (HiSil 233), were added to a clean liquid-solid blender (Patterson-Kelly twin shell blender) equipped with an intensifier bar and head. After all clamps and discharge parts were secured, 6.4 lbs. of heated cotton seed oil that had been uniformly heated to 40-50° in a separate heating vessel were added to the blender. The mixture was then thoroughly mixed to obtain a uniform mixture.

The remaining formulation ingredients shown in Table II infra, were blended thoroughly in a ribbon blender. The well mixed silicon dioxide - cotton seed oil mixture was then added to the ribbon blender and was mixed thoroughly with the dry ingredients to obtain a uniform mixture.

The uniform mixture of the formulation ingredients were slowly fed into a hammer mill with a 2-3 mm screen at a rate such that the mixture was kept below 40°C. Product was discharged into a holding vessel. The particle size of the finished product in the holding vessel was 25 $\mu$m.

Table II lists the ingredients used and their percent by weight.

Table II

| Feed Stimulant Formulation | |
|---|---|
| Ingredient | Weight (Per cent by wt.) |
| Provesteen T: Dried Candida utilis yeast, commercially available from Provesta Corporation, Bartlesville, Oklahoma. | 158.7 lbs. (34.0) |
| Pharmamedia (sifted): Cottonseed flour, commercially available from CCT Corporation, Litchfield, Arizona. | 123.4 lbs. (43.8) |
| Sucrose (dry) | 51.4 lbs. (14.0) |
| Surfynol 825: 3,6-Dimethyl-4-octyne-3,6-diol on amorphous silicon oxide. | 8.9 lbs. ( 2.2) |
| Reax 80N: Sodium lignosulfonate commercially available from Westvaco, Charleston, South Carolina. | 5.6 lbs. ( 1.3) |
| Lomar PW: Sodium salt of naphthalene sulfonic acid -formaldehyde polymer, commercially available from Henkel Chemical, Ambler, Pennsylvania. | 5.6 lbs. ( 1.3) |
| HiSil 233: Silicon dioxide, may be omitted, depending on type of blending equipment. | 8.1 lbs. ( 1.9) |
| Cotton seed oil (crude or once-refined) | 6.4 lbs. ( 1.5) |

Comparative Data on the Effect of the Feeding Stimulant Composition of Example II

A series of tests were conducted to demonstrate the effect on feeding of the stimulant composition of Example II.

The tests of Examples III-V were conducted in the following manner: In each case, the feeding stimulant formulation was suspended in sufficient water to disperse uniformly at the rate of 5 to 50 gallons of spray solution per acre over the desired acreage through standard agricultural spray equipment. The gallonage delivery was calibrated in each case to disperse the feeding stimulant formulation at the rates of 0.5 to 5.0 pounds of formulation per acre. The method of application is known to those skilled in the art of pesticide applications.

Example III

A lettuce crop having a crop size of 128 sq. ft. and an insect population of 11.5 to 20.4 larvae per plant was treated with Javelin WG, a formulation of Bacillus thuringiensis commercially available from Sandoz Crop Protection Corporation. The alone effected no reduction of a population of *Spodoptera exigua* (beet armyworm). However, when feeding stimulant was dispersed at a rate of one-half pound per acre in combination with the dispersal of *Bacillus thuringiensis* at a rate of one-half pound per acre, a 60 percent mortality or reduction of the population was observed.

Example IV

Young cotton plants in pots in the greenhouse were artificially infested with larvae of the corn earworm, *Heliothis zea*, at the rate of 10 larvae per plant and treated with DiPel 2X, a formulation of *Bacillus thuringiensis* commercially available from Abbott Laboratories. A mortality level of 95 percent was achieved with the addition of the feeding stimulant composition; this high level was never able to be achieved using DiPel 2X alone.

Example V

A cotton crop having an area of 0.25 acre, was treated with Bactospeine, a formulation of *Bacillus thuringiensis* commercially available from Monterey Chemical Company, the mortality level of a population of *Estigmene acrea* (saltmarsh caterpillar) was only 42 percent. When the feeding stimulant composition of Example II was additionally dispersed at the same rate i.e., one-half pound per acre, the mortality level increased to 82 percent.

Examples III - V demonstrate that mortality levels significantly increase when the feeding stimulant composition is dispersed onto crops in addition to the dispersal of *Bacillus thuringiensis* sources.

Comparative tests using *Bacillus thuringiensis* dispersal alone, *Bacillus thuringiensis* in combination with a known feeding composition, and *Bacillus thuringiensis* in combination with the feeding stimulant composition of the present invention demonstrate that the inventive feeding stimulant composition increases insect feeding over the other compositions as evidenced by the overall percentage of crop damage.

When *Bacillus thuringiensis* (Javeline WG) was dispersed alone onto a watermelon crop, overall damage to the crop by a population of *Spodoptera exigua* (beet armyworm) was 52 percent damage. When *Bacillus thuringiensis* (Javelin WG) was combined with COAX, a phagostimulant currently on the market and commercially available from CCT Corporation, the damage was 26 percent. When *Bacillus thuringiensis* (Javeline WG) was combined with an inventive feeding stimulant composition, the damage was 18 percent. Thus, the results indicate that overall crop damage can be significantly reduced by the addition of the inventive feeding stimulant composition which causes increased insect ingestion of *Bacillus thuringiensis*, which leads to increased insect mortality level which ultimately results in decreased crop damage.

Example VI

A crop of seedless watermelon with a total area of 96 acres, and having an average of 61 percent of the melons infested with larvae of the beet *armyworm*, *Spodoptera exigua*, was divided into six (6) treatment plots. Following treatment of two plots with a combination of Lannate and Asana (both being chemical insecticides commercially available from DuPont Chemical Company), the level of infestation by the larvae was 32 and 74 percent. When the feeding stimulant was additionally sprayed with the above insecticides on two plots, the infestation level was 8 and 16 percent respectively. The chemical composition of Lannate is S-methyl-N-(methylcarbamoyl)oxy-thioacetimidate. The chemical composition of Asana (esfenvalerate) is (S)-cyano(3-phenoxyphenyl)methyl-(S)-4-chloro-alpha-(1-methylethyl) benzene acetate.

Example VII

A crop of seedless watermelon with a total area of 96 acres, and having an average of 88 percent of the melons infested with larvae of the beet armyworm, *Spodoptera exigua*, was divided into six (6) treatment plots. Following treatment of two of the plots with a combination of Lannate (commercially available from DuPont Chemical Company), the infestation level by the larvae was 72 percent and 24 percent. Following treatment of two plots with a combination of Lannate (commercially available from DuPont Chemical Company) and Pounce, (permethrin), commercially available from FMC Corporation and having the chemical composition (3-phenoxyphenyl)methyl(+)cis, trans-3-(2,2-dichloroethenyl)-2,2-dimethylcyclop ropane-carboxylate, with the dispersal of the feeding stimulant composition, the infestation level was 8 percent and 12 percent respectively. When Lannate and Pounce were dispersed in combination with the phagostimulant, Coax (currently available on the market and commercially available from CCT Corporation), or the phagostimulant, Entice (commercially available from Fermone Company), the infestation levels were 26 percent and 24 percent, respectively.

Examples VI-VII demonstrate that mortality levels significantly increase when the feeding stimulant composition is dispersed onto crops in addition to dispersal of conventional insecticides.

Tests were carried out to determine the effectiveness of a liquid formulation insect feeding stimulant formulation. The ingredients used in the formulation are listed in Table III below.

## Table III
### Ingredients of Feeding Stimulant Formulation 259-02

| Ingredients | Percentage by total weight |
|---|---|
| Cottonseed Flour | 12 |
| Yeast[1] | 9 |
| Sucrose | 3.75 |
| Sipernat 50 S[2] | 0.3 |
| Soy lecithin surfactant | 0.6 |
| Sorbic Acid preservative | 1.0 |
| Cottonseed Oil | 4.0 |
| Bond sticker[3] | 10 |
| Emulsifier[4] | 5 |
| Water | 54.85 |

[1]  Dried Kluvomyces fragilis yeast, available from Provesta Corporation, Bartlesville, Oklahoma.

[2]  Amorphous silicon dioxide, commercially available from Degussa Corporation.

[3]  An agricultural sticker used in pesticide, containing (by weight): synthetic latex (45%), primary aliphatic oxyalkylated alcohol (10%) and inert ingredient (45%), commercially available from Loveland Industries, Inc.

[4]  ATPlus 1992 emulsifier commercially available from ICI Americas Inc.

The stimulant formulation was mixed in a laboratory blender until of uniform consistency based on visual observations and then used for insect feeding tests. The feeding tests were carried out with agar based feeding mixture in 9 cm diameter petri dishes containing the stimulant formulation in a 30°C growth chamber having a light source on the top. Neonate larvae of selected species were placed in the petri dishes containing the feeding mixture. The petri dishes were then sealed with parafilm, incubated in the chamber, and mortality was recorded daily for four days. The results, obtained in triplet, are shown in Table IV.

Table IV

| Test on feeding stimulant formulation[1] | | |
|---|---|---|
| | Formulation | Mortality (% after 4 days) |
| 1. | Control[2] | 40 |
| 2. | Control plus Bond Sticker | 36 |
| 3. | Control plus Invention[3] | 56 |

[1] Three days old Heliothis virescens larvae were used in the tests.
[2] Bacillus thuringiensis spores in oil flowable.
[3] See Table III for invention feeding stimulant formulation.

These results demonstrate that the invention feeding stimulant formulation (3) significantly increases the feed efficiency resulting in a higher death rate of the larvae.

Reasonable variations and modifications, not departing from the essence and spirit of the invention, are contemplated to be within the scope of patent protection sought.

## Claims

1. A feeding stimulant composition comprising
   (a) a yeast selected from *Candida utilis*, *Pichia pastoris* and *Kluvomyces fragilis*;
   (b) a flour selected from cotton seed flour; rape seed flour, rice flour, and wheat flour and
   (c) a polysaccharide source selected from sucrose, fructose, and glucose.

2. The composition of claim 1 wherein:
   (a) said yeast is present in a range of 30 to 40, preferably 34, weight percent of the total weight;
   (b) said flour is present in a range of 35 to 45, preferably 44, weight percent of the total weight;
   (c) said sugar is present in a range of 10 to 20, preferably 14, weight percent of the total weight.

3. The composition of any of the preceding claims additionally comprising a vegetable oil selected from cotton seed oil, peanut oil corn oil, safflower oil and canola (rape seed) oil.

4. The composition of claim 3 wherein said additive vegetable oil is present in a range of 0 to 4, preferably 1.5, weight percent of the total weight.

5. The composition of any of the preceding claims having additionally present therein an additive composition comprising:
   (a) at least one dispersant;
   (b) at least one surfactant; and
   (c) at least one silica compound.

6. The composition of claim 5 wherein:
   (a) said dispersant is selected from the sodium salt of lignosulfonic acid, $(HOCH_3OAR)_n(SO_3Na)x$; the sodium salt of naphthalene sulfonic acid formaldehyde polymer, and mixtures thereof;
   (b) said surfactant is 3,6-dimethyl-4-octyne-3,6-diol on an amorphous silicon dioxide; and
   (c) said silica compound is silicon dioxide $(SiO_2)x$.

7. The composition of claim 5 or 6 wherein:
   (a) said dispersant is present in a range of 2 to 3 weight percent of the total weight;
   (b) said surfactant is present in a range of 1.5 to 3 weight percent of the total weight; and
   (c) said silica compound is present in a range of 1.5 to 2.5 weight percent of the total weight.

8. The composition of claim 7 wherein:
   (a) said dispersant is present in an amount of about 1.3 weight percent of the total weight for said lignosulfonic acid; and about 1.3 weight percent of the total weight for said naphthalene sulfonic acid;
   (b) said surfactant is present in an amount of about 2.2 weight percent of the total weight; and
   (c) said silica is present in an amount of about 1.9 weight percent of the total weight.

9. The composition of any of the preceding claims wherein an insecticide is additionally present.

10. The composition of claim 9 wherein the insecticide is selected from conventional and biorational insecticides.

11. The composition of claim 10 wherein said convention insecticides are selected from carbamates, synthetic pyrethroids, and organophosphate.

12. The composition of claim 10 wherein said biorational insecticides are selected from pyrethrum, *Bacillus thuringiensis,* and *Bacillus sphaericus*.

13. A feeding stimulant composition comprising:

(a) *Candida Utilis* yeast with a total weight percent of 34;
(b) cotton seed flour with a total weight percent of 43.8;
(c) sucrose with a total weight percent of 14;
(d) cotton seed oil with a total weight percent of 1.5;
(e) sodium salt of lignosulfonic acid, $(HOCH_3OAr)_n(SO_3Na)x$ with a total weight percent of 1.3;
(f) sodium salt of naphthalene sulfonic acid formaldehyde polymer with a total weight percent of 1.3;
(g) silicon dioxide $(SiO_2)x$ with a total weight percent of 1.9; and
(h) 3,6-dimethyl-4-octyne-3,6-diol on an amorphous silicon dioxide with a total weight percent of 2.2.

14. A method for the control of insect population comprising blending the feeding stimulant composition of claim 14 with the insecticide *Bacillus thuringiensis* and water and spraying the mixture onto a locus in an amount sufficient to infect target insects.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-9 112 722 (HENKEL KOMMANDITGESELLSCHAFT AUF AKTIEN) | | A01N25/00 A01N63/00 //(A01N63/00, 25:00) |
| A | WO-A-8 504 074 (S.C.JOHNSON & SON INC.) | | |
| A | JOURNAL OF ECONOMIC ENTOMOLOGY vol. 64, no. 6, December 1971, COLLEGE PARK, MARYLAND US pages 1541 - 1543 F.LOPEZ-D ET. AL. 'A New Yeast Hydrolysate -Borax Bait for Trapping the Caribbean Fruit Fly' | | |
| A | CHEMICAL ABSTRACTS, vol. 101, no. 19, 5 November 1984, Columbus, Ohio, US; abstract no. 165590j, KYODO SANGYO KK 'Feeding preference improvement in cockroach baits, with yeasts' page 233 ; & JP-A-59 128 317 (KYODO SANGYO KK) 24 July 1984 | | |
| A | CHEMICAL ABSTRACTS, vol. 116, no. 3, 20 January 1992, Columbus, Ohio, US; abstract no. 17203e, S.TADA 'Slug attractants containing metaldehyde as molluscicide' page 209 ; & JP-A-03 130 203 (S.TADA) 4 June 1991 | | |

TECHNICAL FIELDS SEARCHED (Int. Cl.5 )

A01N

The present search report has been drawn up for all claims

| Place of search | Date of completion of the search | Examiner |
|---|---|---|
| THE HAGUE | 24 JUNE 1993 | DONOVAN T.M. |

EPO FORM 1503 03.82 (P0401)